# EUROPÄISCHE PATENTANMELDUNG

(11) **EP 0 757 136 A1**
(43) Veröffentlichungstag der Anmeldung: **05.02.1997**
(21) Anmeldenummer: 96112320.5
(22) Anmeldetag: 31.07.1996
(51) Int. Cl.: E04B 1/80, F25D 23/06

(54) **Sandwich-Bauelement zum Erstellen von wärmedämmenden und lastabtragenden Wänden, Dächern und Böden**

(30) Priorität: 01.08.1995 DE 19528128
(71) Anmelder: HOESCH SIEGERLANDWERKE GmbH, 57078 Siegen (DE)
(72) Erfinder: Bödefeld, Dietrich Heinz, 57368 Lennestadt (DE)
(74) Vertreter: Pürckhauer, Rolf, Dipl.-Ing.

(57) **Zusammenfassung**

Das als Vakuumelement ausgebildete Sandwich-Bauelement (1) zum Erstellen von wärmedämmenden und lastabtragenden Wänden (2), insbesondere von Kühlhauswänden, weist ein Kastenprofil auf und besteht aus einem offenzelligen Kunststoff-Hartschaumkern (3), z.B. einem Polyurethan-Hartschaumkern, dessen Ausenseite (4) und dessen Innenseite (5) durch zwei Deckschalen (6, 7) aus Blechmaterial und dessen Längsseiten (8, 9) und Querseiten (10, 11) durch eine Versiegelung mit Kunststoff, z.B. einem Epoxidharz, oder eine Integral-Kunststoffschaumschicht luftdicht abgedichtet sind.

An den beiden Deckschalen (6, 7) sind jeweils zwei Seitenstege (12, 13 und 14, 15) angeformt, die sich in Längsrichung des Wandelementes (1) und senkrecht zu den Schalenebenen erstrecken. Die beiden Deckschalen (6, 7) sind über jeweils zwei aneinanderliegende Seitenstege (12, 14) und (13, 15) form- und kraftschlüssig miteinander verbunden.

Das als Vakuumelement ausgebildete Sandwich-Wandelement (1) zeichnet sich durch sehr gute Wärmedämmeigenschaften aus.

## Beschreibung

Die Erfindung betrifft Sandwich-Bauelemente zum Erstellen von wärmedämmenden und lastabtragenden Wänden, Dächern und Böden, mit zwei Deckschalen aus Blechmaterial und einem zwischen diesen eingeschäumten Kunststoff-Hartschaumkern.

Sandwich-Bauelemente mit einem Hartschaumkern aus Polyurethan werden aufgrund ihrer kostengünstigen Herstellung und der weitgehend witterungsunabhängigen Montage in steigendem Maße im Industrie- und Gewerbehochbau eingesetzt.

Der Erfindung liegt die Aufgabe zugrunde, das gattungsgemäße Sandwich-Bauelement hinsichtlich der Wärmedämmeigenschaften zu verbessern.

Diese Aufgabe ist erfindungsgemäß gelöst durch das Sandwich-Bauelement mit den Merkmalen des Patentanspruches 1.

Vorteilhafte Weiterbildungen der Erfindung sind durch die Unteransprüche erfaßt.

Das als Vakuumelement ausgebildete Sandwich-Wandelement mit einem ständig an einen Vakuumerzeuger, vorzugsweise eine Vakuumpumpe, angeschlossenen, offenzelligen Kunststoff-Hartschaumkern, dessen Außenseite und dessen Innenseite durch Deckschalen aus Blechmaterial und dessen Längs- und Querseiten durch eine Versiegelung mit Kunststoff und/oder eine Integral-Kunststoffschaumschicht und/oder Bandmaterial aus Kunststoff oder Gummi luftdicht abgedichtet sind, zeichnet sich durch sehr gute Wärmedämmeigenschaften aus und eignet sich deshalb besonders für den Kühlhausbau. Aufgrund der ausgezeichneten Wärmedämmeigenschaften kann die Wandstärke des Wandelementes gegenüber den bekannten Sandwich-Wandelementen erheblich verringert werden. Durch die starke Reduzierung der Wanddicke wird eine Einsparung an Herstellungsmaterial sowie an Fertigungskosten erreicht, verringern sich die Transport- und Lagerkosten, und der nutzbare Raum wird vergrößert.

Die Erfindung ist nachstehend anhand von Zeichnungen verschiedener Ausführungsformen eines Sandwich-Wandelementes erläutert. Es zeigt in schematischer Darstellung
- Fig. 1: eine perspektivische, ausschnittsweise Darstellung einer mit Sandwich-Wandelementen einer ersten Ausführungsform errichteten Wand,
- Fig. 2: eine der Fig. 1 entsprechende Darstellung einer mit Sandwich-Wandelementen einer zweiten Ausführungsform erstellten Wand und
- Fig. 3: einen Längsschnitt des Fugenbereichs zweier angrenzender Sandwich-Wandelemente einer dritten Ausführungsart.

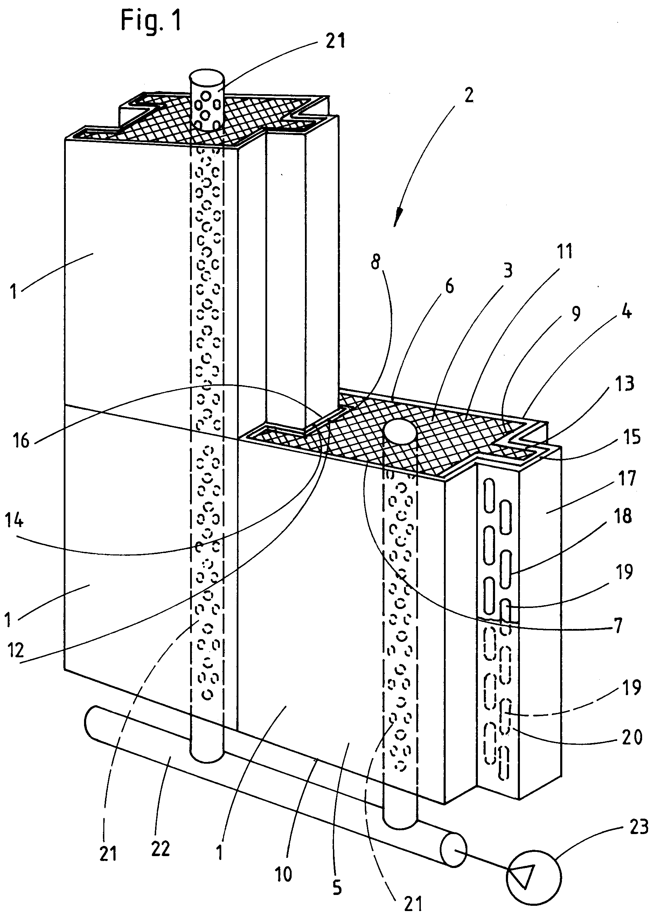

Das als Vakuumelement ausgebildete Sandwich-Wandelement 1 nach Fig. 1 zum Erstellen von wärmedämmenden und lastabtragenden Wänden 2, insbesondere von Kühlhauswänden, weist ein Kastenprofil auf und besteht aus einem offenzelligen Kunststoff-Hartschaumkern 3, z.B. einem Polyurethan-Hartschaumkern, dessen Außenseite 4 und dessen Innenseite 5 durch zwei Deckschalen 6, 7 aus Stahlblech und dessen Längsseiten 8, 9 und Querseiten 10, 11 durch eine Versiegelung mit Kunststoff, z.B. einem Epoxidharz, oder eine Integral-Kunststoffschaumschicht luftdicht abgedichtet sind.

An die beiden Deckschalen 6, 7 sind jeweils zwei Seitenstege 12, 13 und 14, 15 angeformt, die sich in Längsrichtung des Wandelementes 1 und senkrecht zu den Schalenebenen erstrecken. Zur Verbindung zweier Wandelemente 1 sind die Seitenstege 12, 14 und 13, 15 der beiden Deckschalen 6, 7 als Nut 16 und Feder 17 ausgebildet. Die beiden Deckschalen 6, 7 sind über jeweils zwei aneinanderliegende Seitenstege 12, 14 und 13, 15 form- und kraftschlüssig miteinander verbunden.

In den Seitenstegen 12, 13 und 14, 15 sind über deren ganze Länge Unterbrechungsöffnungen 18 angebracht, die als Längsschlitze 19 ausgebildet sind, die durch schmale, tragende Stege 26 unterbrochen sind. Durch die Längsschlitze 19 sind die beiden Deckschalen 6, 7 thermisch nahezu getrennt.

Zur zusätzlichen Abdichtung des Hartschaumkerns 3 können die Längsschlitze 19 in den Seitenstegen 12, 14 und 13, 15 der Deckschalen 6, 7 durch ein Dichtungsband 20 aus Gummi oder Kunststoff abgedeckt werden.

In den Hartschaumkern 3 ist ein perforiertes Vakuumrohr 21 eingesetzt, das über die beiden Querseiten 10, 11 des Wandelementes 1 vorsteht und Anschlüsse zur Verbindung mit den Vakuumrohren 21 angrenzender Wandelemente 1 aufweist, die über eine Verbindungsleitung 22 an eine Vakuumpumpe 23 zur ständigen Aufrechterhaltung eines Vakuums in den einzelnen Sandwichelementen 1 der Wand 2 angeschlossen sind.

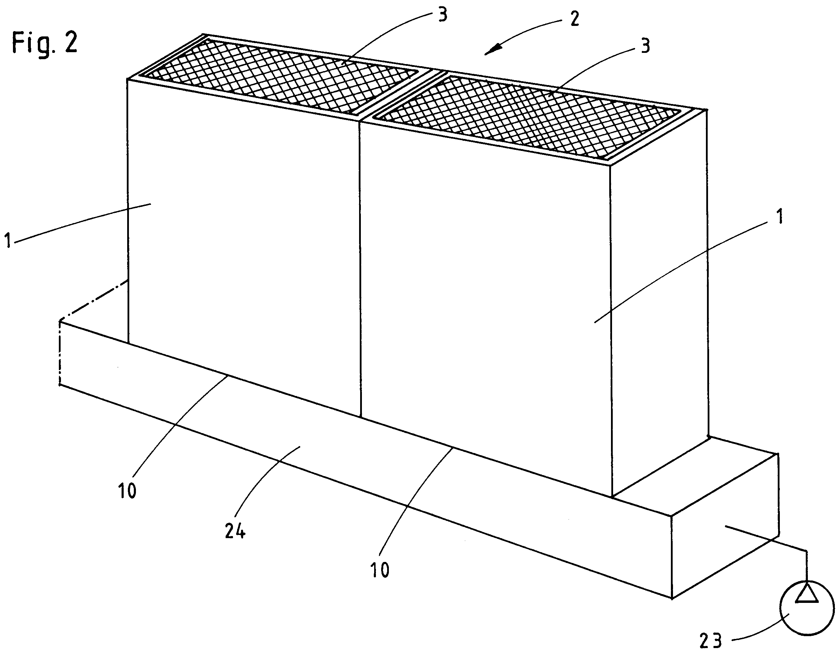

Die in Fig. 2 dargestellten Wandelemente 1 sind mit der unteren, offenen Querseite 10 des Hartschaumkerns 3 luftdicht in einen mit einer Vakuumpumpe 23 verbundenen Anschlußkanal 24 eingesetzt.

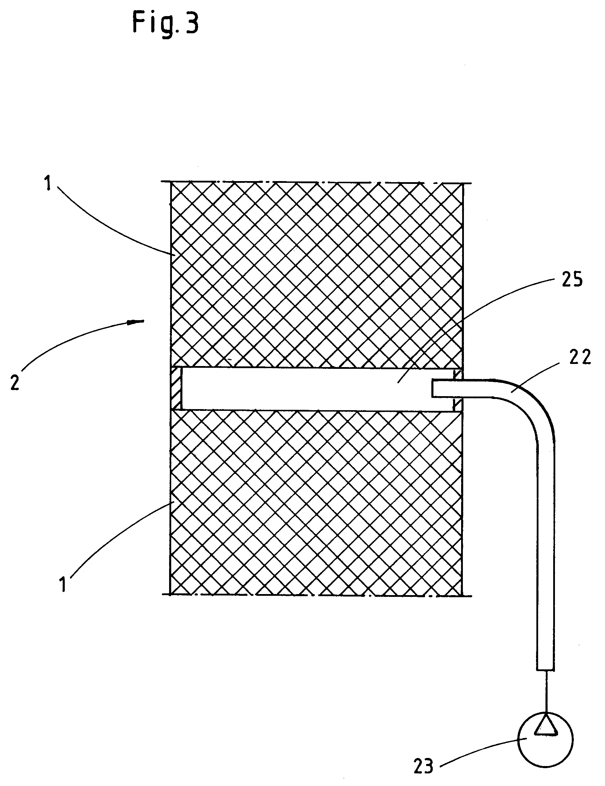

Bei der in Fig. 3 dargestellten Wand 2 sind jeweils zwei Wandelemente 1 mit Abstand gegeneinander gesetzt und der luftdicht abgedichtete Fugenbereich 25 ist über eine Verbindungsleitung 22 an eine Vakuumpumpe 23 angeschlossen.

## Patentansprüche

1. Sandwich-Bauelement zum Erstellen von wärmedämmenden und lastabtragenden Wänden, Dächern und Decken, mit zwei Deckschalen aus Blechmaterial und einem zwischen diesen eingeschäumten Kunststoff-Hartschaumkern, dadurch gekennzeichnet, daß das Sandwich-Bauelement (1) als Vakuumelement mit einem offenzelligen Kunststoff-Hartschaumkern (3) ausgebildet ist, dessen Außenseite (4) und dessen Innenseite (5) durch die beiden metallischen Deckschalen (6, 7) aus Blech und dessen Längs- und Querseiten (8, 9; 10, 11) durch die Versiegelung mit Kunststoff und/oder eine Integral-Kunststoffschaumschicht und/oder Bandmaterial (20) aus Kunststoff oder Gummi luftdicht abgedichtet sind, und daß der Hartschaumkern (3) ständig an einen Vakuumerzeuger (Vakuumpumpe 23) angeschlossen ist.

2. Sandwichelement nach Anspruch 1, gekennzeichnet durch ein in den Hartschaumkern (3) eingesetztes, perforiertes Vakuumrohr (21), das Anschlüsse zur Verbindung mit den Vakuumrohren (21) angrenzender Wandelemente (1) aufweist, die (21) über eine Verbindungsleitung (22) an eine Vakuumpumpe (23) angeschlossen sind.

3. Sandwichelement nach Anspruch 1, dadurch gekennzeichnet, daß dasselbe (1) mit einer offenen Querseite (10) des Hartschaumkerns (3) luftdicht in einen mit einer Vakuumpumpe (23) verbundenen Anschlußkanal (24) eingesetzt ist.

4. Sandwichelement nach Anspruch 1, gekennzeichnet durch den Anschluß des luftdicht abgedichteten Fugenbereich (25) zwischen zwei mit Abstand gegeneinander gesetzten Wandelementen (1) über eine Verbindungsleitung (22) an eine Vakuumpumpe (23).

5. Sandwichelement nach einem der Ansprüche 1 bis 4, dadurch gekennzeichnet, daß das Wandelement (1) ein Kastenprofil aufweist, die Deckschalen (6, 7) des Wandelementes (1) über in Längsrichtung desselben und senkrecht zu den Schalenebenen angeordnete Seitenstege (12, 14; 13, 15) miteinander verbunden sind und daß die Deckschalen (6, 7) durch Unterbrechungsöffnungen (18) in den Seitenstegen (12, 14; 13, 15) thermisch nahezu getrennt sind.

6. Sandwichelement nach Anspruch 5, dadurch gekennzeichnet, daß die Unterbrechungsöffnungen (18) in den Seitenstegen (12 - 15) als Längsschlitze (19) ausgebildet sind, die durch schmale tragende Stege (26) unterbrochen sind.
